# EUROPÄISCHE PATENTSCHRIFT

(11) **EP 1 286 600 B1**
(45) Veröffentlichungstag und Bekanntmachung des Hinweises auf die Patenterteilung: **07.12.2005**
(21) Anmeldenummer: 01936138.5
(22) Anmeldetag: 27.03.2001
(51) Int. Cl.: A23L 2/02

(54) **VERFAHREN ZUR GEWINNUNG VON OBST- UND GEMÜSESÄFTEN**
METHOD FOR EXTRACTING FRUIT AND VEGETABLE JUICES
PROCEDE POUR EXTRAIRE DES JUS DE FRUITS ET DE LEGUMES

(30) Priorität: 10.05.2000 DE 10022892
(43) Veröffentlichungstag der Anmeldung: 05.03.2003
(73) Patentinhaber: Westfalia Separator AG, 59302 Oelde (DE)
(72) Erfinder: GÜNNEWIG, Wolfgang, D-59269 Beckum (DE); PECORONI, Stefan, 59302 Oelde (DE)
(74) Vertreter: Specht, Peter
(86) Internationale Anmeldenummer: PCT/EP2001/003424
(87) Internationale Veröffentlichungsnummer: WO 2001/084965

(56) Entgegenhaltungen:
- EP-A- 0 545 944
- EP-A- 0 888 718
- NL-C- 24 022

## Beschreibung

Die Erfindung betrifft ein Verfahren zur Gewinnung von Obst- und Gemüsesäften, bei dem Früchte zu Gewinnung von Maische zerkleinert werden und bei dem die aus den zerkleinerten Früchten gewonnene Maische entsaftet wird.

Ein gattungsgemäßes Verfahren, bei dem ein naturtrüber Frucht- oder Gemüsesaft gewonnen werden soll, ist aus der EP 0 *545* 944 B 1 bekannt. Nach dieser Schrift wird eine aus zerkleinerten Früchten gewonnene Maische in einer Vollmantel-Schneckenzentrifuge in Fruchtfleischteile und Saft getrennt, wobei die Abtrennung von unlöslichen Fruchtfleischteilen mit der Vollmantel-Schneckenzentrifuge zeitlich unmittelbar nach dem Zerkleinern der Früchte geschieht und unmittelbar danach eine Inaktivierung fruchteigener pektolytischer Enzyme und Polyphenoloxidasen durch Erhitzung des aus der Vollmantel- Schneckenzentrifuge ablaufenden Saftes erfolgt.

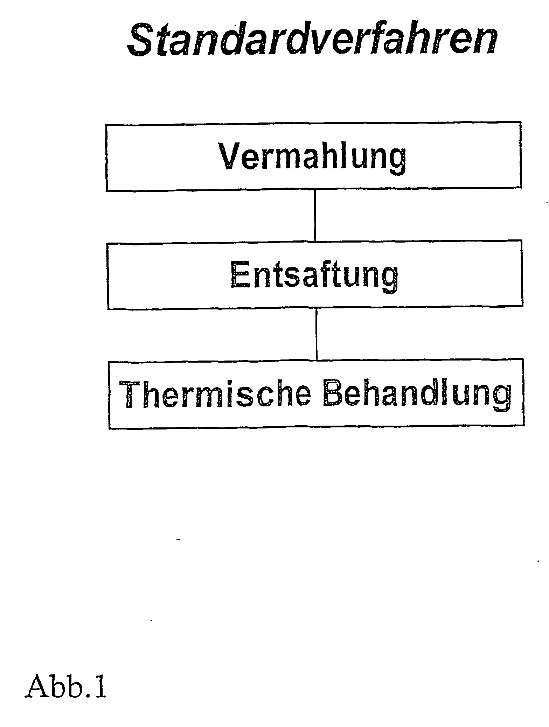

Wie in der EP 0 545 944 B1 ausdrücklich beschrieben wird zunächst aus Früchten durch einen Mahlprozeß eine Maische gewonnen. In einem nächsten Prozeßschritt wird die Maische entsaftet (siehe Figur 1). Dabei spielt die physikalische Struktur der Maische eine wichtige Rolle.

Neben einer Gewinnung mit Vollmantel-Schneckenzentrifugen können Säfte auch mittels Pressen gewonnen werden. Zu den einsetzbaren Pressen gehören diskontinuierlich arbeitende Pressen, sowie Band- und Schneckenpressen. Für die Gewinnung von Saft werden Schneckenpressen allerdings nur in geringem Umfang eingesetzt. Sie finden sich eher im Bereich der Erzeugung von Wein und Fruchtwein.

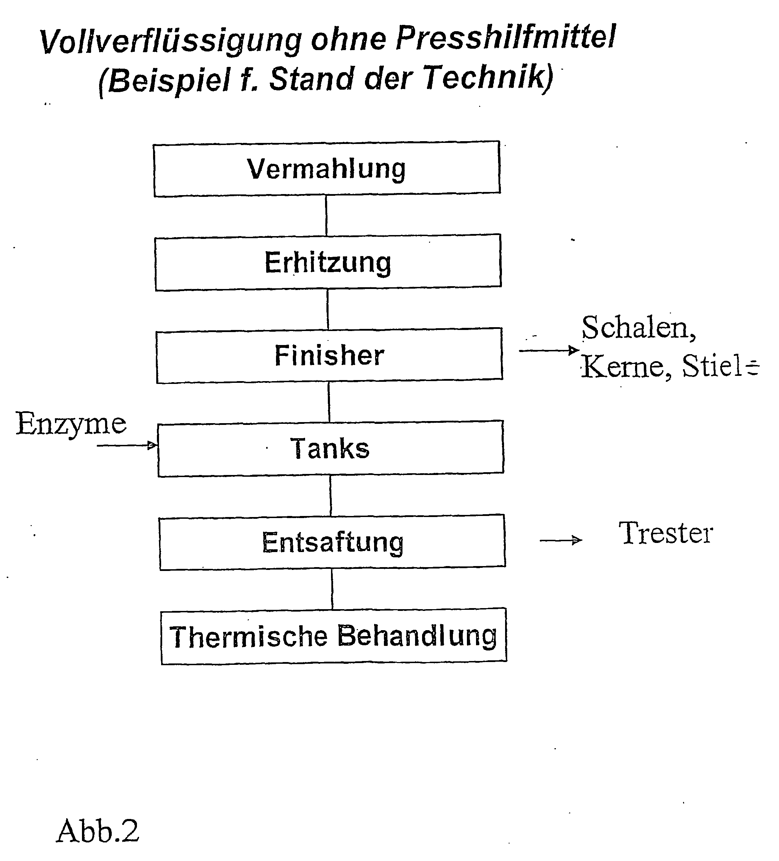

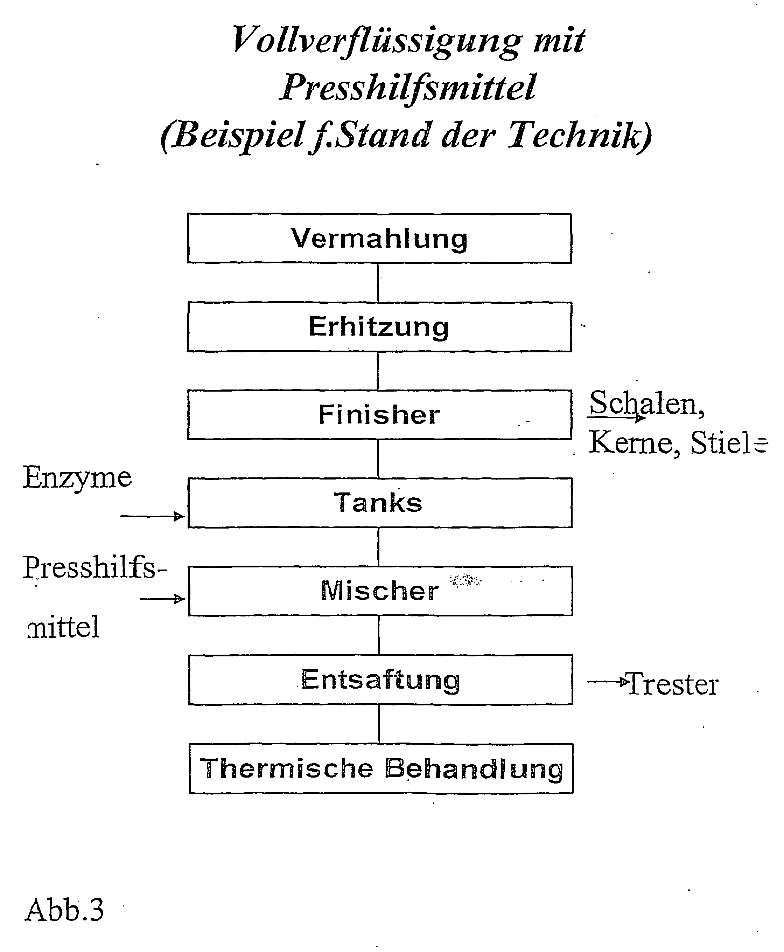

Es ist auch möglich, bei der Saftgewinnung Vollverflüssigungsenzyme einzusetzen. Dabei verschlechtert sich die Struktur der Maische dadurch, daß aus geschmacklichen Gründen Feststoffe wie Stiele, Kerne und Schalen aus der Maische abgetrennt werden. Dies geschieht zumeist durch sogenannte Finisher (z. B. Siebmaschinen; siehe Figur 2). Die Strukturverschlechterung der Maische läßt sich zwar dadurch zumindest weitgehend ausgleichen, daß der Maische Presshilfsmittel zugesetzt werden (siehe Figur 3). Als Presshilfsmittel werden nach dem Stand der Technik im wesentlichen anorganische oder organische Stoffe eingesetzt, welche die physikalische Struktur der Maische verbessern. Am häufigsten verwendet werden Reisspelzen, Balsaholz oder Perlite. Diese Stoffe verursachen aber zusätzliche Kosten und verteuern somit die Saftherstellung. Zusätzlich stellen sie trotz ihrer teilweise natürlichen Herkunft einen an sich nicht erwünschten Fremdstoff im jeweiligen Fruchtsaft-Naturprodukt dar.

Die Erfindung zielt vor diesem Hintergrund darauf ab, die Qualität der Maische bei der Fruchtsaftgewinnung zu erhöhen.

Die Erfindung erreicht dieses Ziel durch den Gegenstand des Anspruches 1. Anders als beim Stand der Technik werden nach der Lehre der Erfindung einer anderen oder derselben Maische vor dem Entsaften - sowie insbesondere nach einem optionalen Abtrennen von Stielen oder Kernen - Schalenbestandteile zugesetzt. Diese Lehre beruht auf der Idee, durch eine Schalenbestandteilzugabe die Qualität der zu entsaftenden Maische zu erhöhen. Schalenbestandteile haben keinerlei negative geschmackliche Eigenschaften. Sie führen aber zu einer Verbesserung der Maischestruktur. Dieses gilt im wesentlichen für jede Art der Entsaftung.

Nach einem besonders bevorzugten Ausführungsbeispiel der Erfindung werden aus der aus den zerkleinerten Früchten gewonnenen Maische in einem Finisher die Stiel-, Kern- und Schalenbestandteile abgetrennt, woraufhin wiederum die Schalenbestandteile von den übrigen aus der Maische abgetrennten Feststoffbestandteilen abgetrennt und in eine/die Maische vor deren Entsaftung zurückgeleitet werden. Auch diese Version der Erfindung eignet sich insbesondere für eine Saftgewinnung, bei der Vollverflüssigungsenzyme eingesetzt werden. Die Erfindung nutzt insbesondere die Erkenntnis, daß aus geschmacklichen Gründen zwar ein Abtrennen der Stiele und Kerne aus der Maische notwendig ist, daß sich aber andererseits ein Abtrennen der Schalenbestandteile geschmacklich nicht auswirkt. Insbesondere das Abtrennen der Schalenbestandteile führt nämlich zu der Strukturverschlechterung der Maische. Durch das Rückführen der Schalenbestandteile wird dies verhindert. Es wird in Abkehr vom Stand der Technik sogar möglich, auf das Zusetzen anderer, fruchtfremder und zusätzliche Kosten verursachender Presshilfsmittel zu verzichten.

Besonders vorteilhaft ist der Einsatz der Erfindung bei einer Entsaftung mittels einer Vollmantel-Schneckerizentrifuge.

Besonders vorteilhaft ist es ferner, wenn im Schritt c gemäß Anspruch 1 bei der Entsaftung anfallende Schalenbestandteile aus derselben Maische oder aus einer anderen Fruchtmaische der zu entsaftenden Maische zugesetzt werden. Auch hierbei ist es besonders vorteilhaft, wenn die Entsaftung mittels einer Vollmantel-Schneckenzentrifuge erfolgt.

Weitere vorteilhafte Ausgestaltung der Erfindung sind den übrigen Unteransprüchen zu entnehmen.

Es ist theoretisch auch denkbar, einen Teil oder sämtliche abgetrennte Schalenbestandteile zwischenzulagern und dann anderen Fruchtmaischen zuzusetzen. So könnte man beispielsweise bei der Apfel- oder Birnensaftgewinnung die Schalenbestandteile abtrennen und dann nicht in die Maische zurückzuleiten sondern zur Gewinnung eines Fruchtsaftes aus einer anderen Fruchtsorte zur Verbesserung der Maischestruktur der Maische aus dieser anderen Fruchtsorte beimischen.

Es ist auch denkbar, den Anteil an Schalenbestandteilen über den natürlichen Gehalt in der Ursprungsfrucht hinaus zu erhöhen und dadurch die Eigenschaften der Maische -beispielsweise zur Gewinnung eines besonders hoch qualitativen und teuren Safteszu verbessern.

Es ist auch denkbar, die Wirkung der Schalenbestandteile durch eine an die Eigenschaften der Ursprungsfrucht angepaßten Vermahlung - z.B. feiner oder gröber - zu optimieren.

Es ist auch denkbar, die Schalenbestandteile vor einer Zugabe zu einer Maische einer thermischen Behandlung zu unterziehen. Dadurch wird die Struktur der Schalenbestandteile verfestigt und gleichzeitig eine Haltbarkeit erreicht.

Das Abtrennen der Schalenbestandteile von den weiteren Feststoffen an sich ist einfach zu bewerkstelligen. Es ist auch beispielsweise von der Traubentrestergewinnung zur Produktion von Traubenkernöl her an sich bekannt. Es stellt den Fachmann somit vor keinerlei technische Schwierigkeiten. Neu ist an dem vorliegenden Verfahren allerdings, daß nach dem Abtrennen der Kern- und Stielbestandteile die Schalenbestandteile in die Maische zurückgeleitet werden, um deren Struktur zu verbessern. Durch die Schalenrückführung kommt es zu einer deutlichen Verbesserung der Maischestruktur und damit der Entsaftbarkeit der Maische. Es wird also der Vorteil z.B. der Vollverflüssigung genutzt, ohne den Nachteil der verschlechterten Maischeeigenschaften -insbesondere den Nachteil der schlechteren Entsaftbarkeit der Maische in Kauf nehmen zu müssen.

Nachfolgend wird die Erfindung an Hand von Ausführungsbeispielen unter Bezug auf den Stand der Technik näher beschrieben. Es zeigt:
- Figur 1: ein Flußdiagramm zur Veranschaulichung eines Standardverfahrens zur Saftgewinnung nach dem Stand der Technik;
- Figur 2: ein Flußdiagramm einer Saftgewinnung z.B. mittels einer Vollverflüssigung ohne zusätzliche Presshilfsmittel nach dem Stand der Technik;
- Figur 3: ein Flußdiagramm z.B. einer Vollverflüssigung unter der Zugabe von Presshilfsmitteln nach dem Abtrennen der Schalen-, Stiel- und Kernbestandteilen nach dem Stand der Technik;
- Figur 4: ein Flußdiagramm eines Verfahrens zur Saftgewinnung mit einer Schalenrückführung gemäß der Erfindung;
- Figur 5: ein Flußdiagramm eines Verfahrens zur Trübsaftherstellung mit einer Schalenrückführung gemäß der Erfindung.

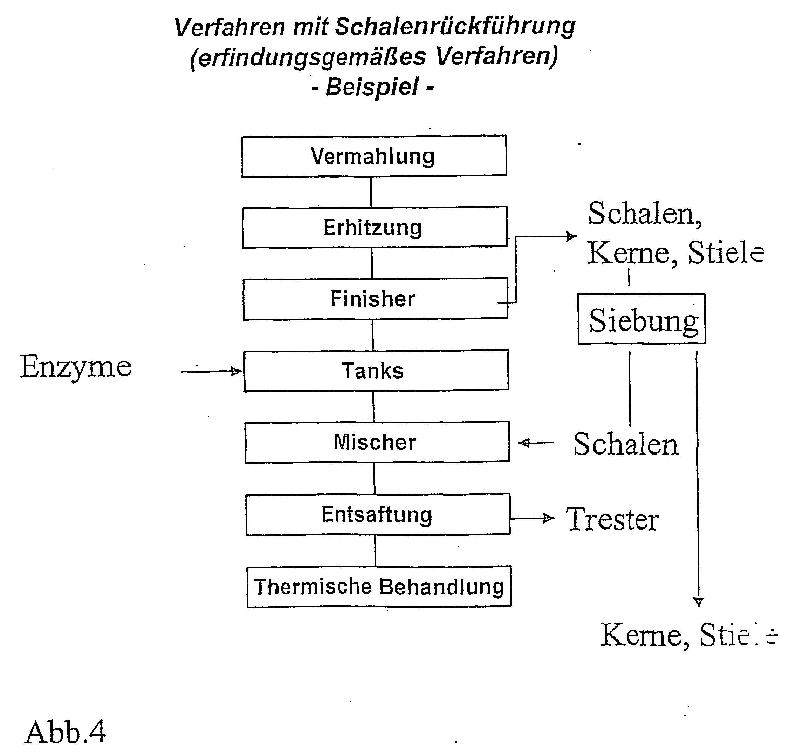

Nach Figur 4 wird zunächst das Frucht- oder Gemüseausgangsmaterial in einem ersten Arbeitsschritt vermahlen. Daraufhin erfolgt ein (optionales) Erhitzen der beim Vermahlen gewonnenen Maische und das Abtrennen von Schalen und Kernen in einem Finisher. Die so gewonnene Maische wird in Zwischentanks zwischengespeichert, wobei als Option der Maische Enzyme (z.B. zur Vollverflüssigung) zugesetzt werden können. Parallel hierzu werden z.B. in einem Sieb oder in einer Zentrifuge die Schalenbestandteile von den Stiel- und Kernbestandteilen getrennt. Die Stiel- und Kernbestandteile können nunmehr entsorgt und/oder separat verarbeitet werden. Die Schalenbestandteile werden dagegen zusammen mit dem aus den Zwischentanks abgeleiteten Maischezwischenprodukt in einen Mischer gegeben, um durch eine Rückführung der Schalenbestandteile in die Maische die Struktur derselben zu verbessern. Anschließend erfolgt die eigentliche Entsaftung unter Abtrennung des Tresters. Der gewonnene Saft kann zur Verbesserung seiner Lagerfähigkeitt im Anschluß an das Entsaften noch einer thermischen Behandlung unterzogen werden.

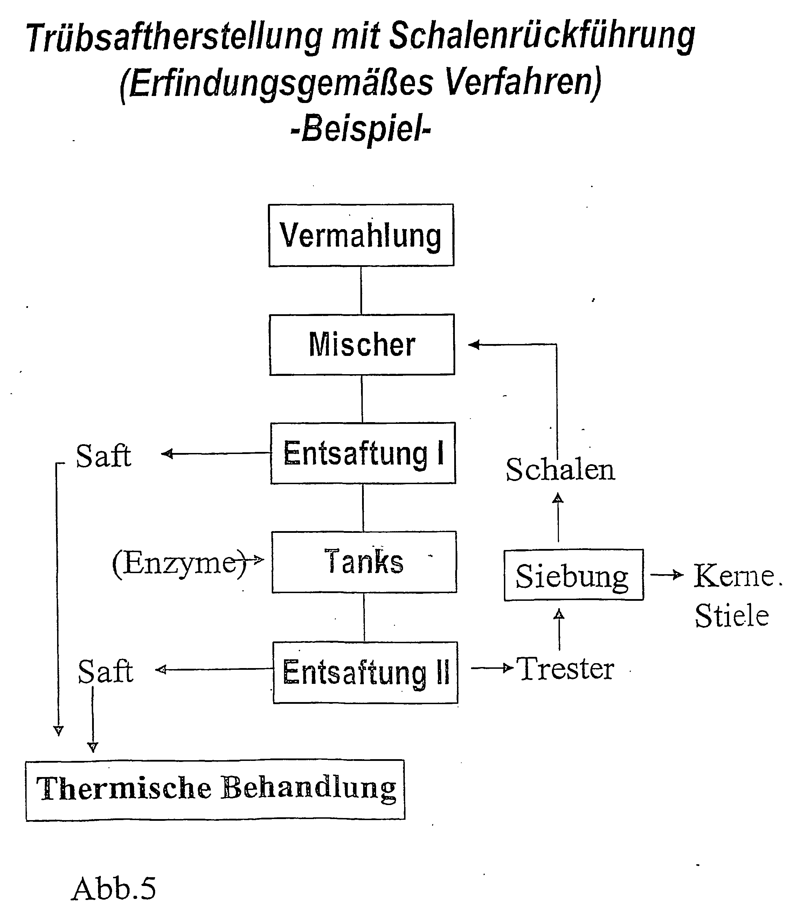

Bei der Gewinnung eines naturtrüben Saftes empfiehlt sich eine Adaption des Verfahrens gemäß der Lehre der Figur 5. Hierbei werden wiederum zunächst die Früchte zermahlen und nach Durchlaufen eines Mischers entsaftet. Nach dem Entsaften erfolgt -falls gewünscht- das Zusetzen von Enzymen sowie ein weiteres Entsaften der zwischengelagerten Maische. Im Anschluß an das eigentliche Entsaften ist es möglich, den Saft einer thermischen Behandlung zu unterziehen. Aus dem entsafteten Trester werden wiederum z. B. durch ein Sieben die Schalenbestandteile abgetrennt und vorzugsweise allein oder zusammen mit anderen gewünschten Bestandteilen/Stoffen in die zu verarbeitende Maische zurückgeleitet. Im Mischer erfolgt das Mischen der zurückgeleiteten Schalenbestandteile mit einer/der Maische. Das Abtrennen der Schalenbestandteile kann in Abweichung zur Darstellung der Figur 5 selbstverständlich auch bereits nach dem ersten Entsaftungsschritt erfolgen.

## Patentansprüche

1. Verfahren zur Gewinnung von Obst- oder Gemüsesäften, bei dem:
a) Früchte zur Gewinnung von Maische zerkleinert werden,
b) die aus den zerkleinerten Früchten gewonnene Maische entsaftet wird,
**dadurch gekennzeichnet, daß**
c) einer anderen oder derselben Maische vor dem Entsaften Schalenbestandteile zugesetzt werden.

2. Verfahren nach Anspruch 1, **dadurch gekennzeichnet, daß** die Schalenbestandteile aus Früchten gewonnen werden.

3. Verfahren nach Anspruch 1 oder 2, **dadurch gekennzeichnet, daß** aus der Maische Stiel-, Kern- und/oder Schalenbestandteile abgetrennt werden, woraufhin die Schalenbestandteile von den übrigen aus der Maische abgetrennten Feststoffbestandteilen getrennt und vor dem Entsaften der Maische in eine/die Maische zurückgeleitet werden.

4. Verfahren nach Anspruch 1, 2 oder 3 **dadurch gekennzeichnet, daß** bei der Gewinnung eines naturtrüben Saftes aus dem bei dem Entsaften abgetrennten Trester die Schalenbestandteile abgetrennt und in eine/die zu entsaftende Maische zurückgeleitet werden.

5. Verfahren nach einem der vorstehenden Ansprüche, **dadurch gekennzeichnet, daß** die Schalenbestandteile nach einem Zusetzen von Enzymen zur Maische einer/der Maische zugesetzt werden.

6. Verfahren nach einem der vorstehenden Ansprüche, **dadurch gekennzeichnet, daß** die Schalenbestandteile nach einem Zusetzen von Vollverflüssigungsenzymen einer Maische zugesetzt werden.

7. Verfahren nach einem der vorgenannten Ansprüche, **dadurch gekennzeichnet, daß** einer/der Maische ein über den natürlichen Schalenmengenanteil der eingesetzten Früchte hinausgehender Anteil an Schalenbestandteilen zugesetzt wird.

8. Verfahren nach einem der vorstehenden Ansprüche, **dadurch gekennzeichnet, daß** die Schalenbestandteile von den übrigen aus der Maische abgetrennten Feststoffbestandteilen durch Sieben und/oder Schleudem abgetrennt werden.

9. Verfahren nach einem der vorstehenden Ansprüche, **dadurch gekennzeichnet, daß** die Schalenbestandteile vor dem Zusatz zu einer/der Maische einer thermischen Behandlung unterzogen werden.

10. Verfahren nach einem der vorstehenden Ansprüche, **dadurch gekennzeichnet, daß** die Nicht-Schalenbestandteile einer/der weiteren Nutzung zugeführt werden

11. Verfahren nach einem der vorstehenden Ansprüche, **dadurch gekennzeichnet, daß** die aus den zerkleinerten Früchten gewonnene Maische mittels einer Vollmantel-Schneckenzentrifuge entsaftet wird.

## Claims

1. Method for extracting fruit or vegetable juices, in which:
a) items of fruit are reduced to obtain a mash,
b) the juice is extracted from the mash obtained from the reduced items of fruit,
**characterized in that**
c) peel components are added to another or the same mash before the extraction of the juice.

2. Method according to Claim 1, **characterized in that** the peel components are obtained from items of fruit.

3. Method according to Claim 1 or 2, **characterized in that** stalk, core and/or peel components are separated from the mash, whereupon the peel components are separated from the other solid components separated from the mash and are returned to a/the mash before the extraction of juice from the mash.

4. Method according to Claim 1, 2 or 3, **characterized in that**, when extracting a naturally cloudy juice, the peel components are separated from the pulp that is separated during the extraction of the juice and are returned to a/the mash from which juice is to be extracted.

5. Method according to one of the preceding claims, **characterized in that** the peel components are added to a/the mash after adding enzymes to the mash.

6. Method according to one of the preceding claims, **characterized in that** the peel components are added to a mash after adding full liquefaction enzymes.

7. Method according to one of the preceding claims, **characterized in that** a fraction of peel components exceeding the natural quantitative fraction of peel of the items of fruit used is added to a/the mash.

8. Method according to one of the preceding claims, **characterized in that** the peel components are separated by sieving and/or centrifuging from the other solid components that are separated from the mash.

9. Method according to one of the preceding claims, **characterized in that** the peel components are subjected to a thermal treatment before being added to a/the mash.

10. Method according to one of the preceding claims, **characterized in that** the non-peel components are passed on for a/the further use.

11. Method according to one of the preceding claims, **characterized in that** juice is extracted by means of a solid-bowl screw centrifuge from the mash obtained from the reduced items of fruit.

## Revendications

1. Procédé de production de jus de fruits ou de légumes dans lequel :
a) les fruits sont broyés pour l'obtention d'une pulpe,
b) le jus est extrait de la pulpe obtenue à partir des fruits broyés,
**caractérisé en ce que**
c) des pelures de fruits sont ajoutées à une autre pulpe ou à la même pulpe avant l'extraction du jus.

2. Procédé selon la revendication 1, **caractérisé en ce que** les pelures sont obtenues à partir de fruits.

3. Procédé selon la revendication 1 ou 2, **caractérisé en ce que** sont éliminés, de la pulpe, les queues, les pépins et/ou les pelures, après quoi les pelures sont séparées des autres composants solides éliminés de la pulpe et sont réintroduites dans une/la pulpe avant que le jus de la pulpe ne soit extrait.

4. Procédé selon la revendication 1, 2 ou 3, **caractérisé en ce que**, lors de la production d'un jus non clarifié à partir du marc éliminé lors de l'extraction du jus, les pelures sont enlevées et réintroduites dans une/la pulpe dont le jus est à extraire.

5. Procédé selon l'une quelconque des revendications précédentes, **caractérisé en ce que** les pelures de fruits sont ajoutées à une/ la pulpe après un ajout d'enzymes à la pulpe.

6. Procédé selon l'une quelconque des revendications précédentes, **caractérisé en ce que** les pelures sont ajoutées à une pulpe après l'ajout d'enzymes de liquéfaction complète.

7. Procédé selon l'une quelconque des revendications précitées, **caractérisé en ce qu'**à une/la pulpe est ajoutée une proportion de pelures dépassant la proportion de pelures naturelle des fruits utilisés.

8. Procédé selon l'une quelconque des revendications précédentes, **caractérisé en ce que** les pelures sont séparées des autres composants solides éliminés de la pulpe par tamisage et/ou centrifugation.

9. Procédé selon l'une quelconque des revendications précédentes, **caractérisé en ce que** les pelures sont soumises à un traitement thermique avant l'ajout à une/la pulpe.

10. Procédé selon l'une quelconque des revendications précédentes, **caractérisé en ce que** les composants n'étant pas des pelures sont employés pour un autre usage.

11. Procédé selon l'une quelconque des revendications précédentes, **caractérisé en ce que** le jus est extrait de la pulpe, obtenue à partir des fruits broyés, au moyen d'une centrifuge à vis sans fin et à bol plein.
